**Europäisches Patentamt**

**European Patent Office**

**Office européen des brevets**

(19)

(11) **EP 1 445 289 A2**

(12) **EUROPEAN PATENT APPLICATION**
published in accordance with Art. 158(3) EPC

(43) Date of publication:
**11.08.2004 Bulletin 2004/33**

(51) Int Cl.⁷: **C09D 1/00**, C01B 33/32

(21) Application number: **02743683.1**

(86) International application number:
**PCT/JP2002/006212**

(22) Date of filing: **21.06.2002**

(87) International publication number:
**WO 2003/000806 (03.01.2003 Gazette 2003/01)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **22.06.2001 JP 2001189875**

(71) Applicant: **Kokuta, Hiroshi**
**Chigasaki-shi, Kanagawa 253-0004 (JP)**

(72) Inventors:
• **KOKUTA, Hiroshi**
**Chigasaki-shi, Kanagawa 253-0004 (JP)**

• **KOKUTA, Katsuhiro**
**Chigasaki-shi, Kanagawa 253-0004 (JP)**
• **UCHIDA, Hideaki**
**Sagamihara-shi, Kanagawa 229-1124 (JP)**
• **KOKUTA, Kenji**
**Chigasaki-shi, Kanagawa 253-0001 (JP)**
• **KOKUTA, Naoto**
**Shikama-ku, Himeji-shi, Hyogo 670-0000 (JP)**

(74) Representative: **Hartz, Nikolai**
**Wächtershäuser & Hartz,**
**Patentanwälte,**
**Weinstrasse 8**
**80333 München (DE)**

(54) **AQUEOUS FILM FORMING INORGANIC COMPOSITION INORGANIC FOAM THERMALLY INSULATING COMPOSITE AND METHOD FOR PRODUCTION THEREOF**

(57) An aqueous film forming inorganic composition which is prepared by reacting metallic silicon and an alkali metal hydroxide in an aqueous solvent in the presence of at least one compound selected from the group consisting of a fluoride and sulfurous acid, nitrous acid, phosphorous acid and a salt of the acid, characterized in that it has a pH value of 10 to 13 at 20°C and comprises colloidal particles of the product of the above reaction having various, that is, relatively large, medium and relatively small particle diameters; an inorganic foam prepared by heating the composition to 150°C or higher; and methods for preparing the composition and the foam. The aqueous film forming inorganic composition can be suitably used for preparing an inorganic foam and a thermally insulating composite material which are excellent in thermal insulation, and is not pollutant to the environment and can be recycled in the environment.

Figure 2

**Description**

Technical Field

The present invention relates to a water-based membrane-forming inorganic composition, an inorganic foam, a heat insulating composite material, and a manufacturing method thereof.

Background Art

Advanced life at present depends on consumerism of energy such as electricity and gas inevitably requiring a high performance heat insulating material to resource savings. The high performance heat insulating material currently includes mainly synthetic organic resin foams such as polystyrene foam and urethane foam. However, synthetic resin foam cannot be easily decomposed in an environment and discharges a noxious gas, bad smell, and black smoke when burnt and, therefore, a problem of environmental pollution arises.

On the other hand, inorganic materials are generally noncombustible and prepared by using a natural product as a raw material and, thus, when broken to be discarded, reduced to soil causing no pollution through recycling to the earth. Consequently, development for the high performance heat insulating material made of an inorganic material, enabling continuous or high recycling molding such as for synthetic resin will create a new industrial field and hence, largely contribute to national life ambient.

Conventional inorganic foam includes, for example, a high temperature-aging product including ALC and cement foam, the inorganic foam including a glass-based, shirasu-based, $TiO_2$-based, $ZrO_2$-based and phosphate-based foam, or the like, and foams including a silicon-based and silicon rubber-based foam prepared by hybridization of silica and an organic material.

However, in the conventional foaming technology, pores are arranged evenly in a honeycomb form to improve the heat-insulating performance and making fine and dense pores was developed. Hence, though the inorganic material was expected as a noncombustible material, is inferior to organic foams in the heat-insulating performance even when fine and dense pores are formed. Basically, a heat conduction performance of the inorganic material making a pore wall is inferior to that made of the organic material. Therefore, the conventional insulation material is mainly made of an organic foaming agent.

As described above, for the conventional inorganic foam, pores have been intensively improved to have an even arrangement affective for the heat-insulating performance and, therefore, the performance of the organic material could not be exceeded.

The present invention was created in consideration of such situation and has objects to provide a water-based membrane-forming inorganic composition useful as the inorganic foam and a heat insulating composite material, which are excellent in heat insulation, not polluting the environment and environmentally recyclable, and as a manufacturing material for such materials.

Concerning the present invention, JP-B-7-14801 discloses the manufacturing method for the water-based membrane-forming inorganic compound, JP-A-8-73212 discloses a high concentration borate compound and a fire-resisting and fire proof composition containing the water-based membrane-forming inorganic compound and also a combined material and a fire-resisting and fire proof material using the composition, and the JP-A-2001-058815 discloses a highly polymerized precursor material for molding the water-based membrane-forming inorganic compound and the method for molding the same. The inventions described on the publications relate to the water-based membrane-forming inorganic compound having a water solubility, thermoplasticity, and a heavy weight average molecular weight.

Brief Description of the Drawings

Fig. 1 is a conceptual rendering of a measuring apparatus for heat conductivity by using a routine method (absolute method) for measuring heat conductivity of the inorganic foam according to the present invention.

Fig. 2 is a sketched view of an observation of colloidal particles of the water-based membrane-forming inorganic composition according to the present invention using an SEM (X 400.) In the figure, (a), (b) and (c) are for composition A, composition B and composition C, respectively. 1a, 1b and 1c show relatively large-sized colloidal particles, 2a, 2b and 2c show relatively middle-sized colloidal particles, and 3a, 3b and 3c show relatively small-sized colloidal particles.

Fig. 3 is the sketched view of a sectional structure of the inorganic foam, which was obtained by foaming of each composition A, B and C by heating, observed with the SEM (X 60). In the figure, (a), (b) and (c) are for the foam of composition A, the foam of composition B and the foam of composition C, respectively.

Fig. 4 is a chart of TG-DTA measured, when composition A was heated at a temperature ranging from 15.8 to 900 deg. C. In the figure, the axis of abscissas represents a weight change (mg), the axis of coordinates represents a temperature (deg. C), (a) is a curve of DTA (differential thermogravimetric analysis) curve, and (b) is a TG (weight change caused by temperature change) curve.

Fig. 5 is a FT-IR spectrum chart of composition A obtained at 20 deg. C (ordinary temperature). The axis of abscissas represents absorption intensity and the axis of coordinates represents $cm^{-1}$ (kayser).

Fig. 6 is the FT-IR spectrum chart obtained by heating composition A to 400 deg. C. The axis of abscissas represents absorption intensity and the axis of coordinates represents $cm^{-1}$ (kayser).

Fig. 7 is the FT-IR spectrum chart obtained by heating composition A to 800 deg. C. The axis of abscissas represents absorption intensity and the axis of coordinates represents $cm^{-1}$ (kayser).

Fig. 8 is a figure expressing a temperature change of heat conductivity of the inorganic foam obtained by heating composition A to 305 to 350 K. In the figure, the axis of abscissas represents heat conductivity (W/m*k) and the axis of coordinates represents temperature (K).

Fig. 9 is the figure expressing the temperature change of heat conductivity of the inorganic foam obtained by heating composition B to 305 to 350 K. In the figure, the axis of abscissas represents heat conductivity (W/m*k) and the axis of coordinates represents temperature (K).

Fig. 10 is the figure expressing a temperature change of heat conductivity of the inorganic foam obtained by heating composition C to 305 to 350 K. In the figure, the axis of abscissas represents heat conductivity (W/m*k) and the axis of coordinates represents temperature (K).

Fig. 11 is a figure expressing the result of a test for an inorganic foamed mold obtained in Example 15 by using a cone calorimeter III.

Disclosure of the Invention

The present inventors conceived that an inorganic material with a double or triple layer film rather than a single layer film could be improved in a heat insulation performance to have a lightweight and an excellent strength. This means that developing a method for converting the single layer film to a multilayer film enables a competitive heat insulation performance of the inorganic foam with the organic foam.

Foaming performance must present a phenomenon of softening by heat, that is thermoplasticity, which can be found in, e. g., a synthetic resin. In order to prepare a foam, the pore membrane must have the membrane-forming strength against an increasing gas pressure. When an enough membrane forming strength is not satisfied, the foam cannot be produced. Hence, the inorganic material suitable for producing the foam must be a high polymer having thermoplasticity and a membrane forming performance resembling the synthetic resin. This means that the inorganic material suitable for producing the foam must be an inorganic high polymer having thermoplasticity and the membrane forming performance and also having a property allowing hardening by heat through dehydration by heating.

For the foam including an organic material and an inorganic-organic hybrid, an organic solvent is used as a foaming agent. However, the organic solvent cannot be blended with a water-based inorganic compound. Fortunately, we conceived that the water-based inorganic compound contains water molecules as a component and, therefore, no use of foaming agent allows generating nonpolluting water vapor in a processing step of heating, dehydrating, thickening and manufacturing to enable to use this as the foaming agent.

As the result of repeated various experiments, the inventors found that the colloidal particles of the water-based membrane-forming inorganic composition made uneven rather than even caused the improved heat insulation performance. The excellent heat insulation performance was yielded from the inorganic foam produced by heating was constituted by amorphous colloidal particles, which have the large, middle and small sizes, of the water-based membrane-forming inorganic composition. An observation of a thermally foamed section showed a structure in which the large bubbles contain the middle bubbles and the middle bubbles contain the small bubbles. Subsequently, the inventors found a reaction condition enabling to yield such the water-based membrane-forming inorganic composition resulting in completion of the present invention.

Accordingly, the present inventions provide the following.

(1) First of the invention provides a water-based membrane-forming inorganic composition produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt, wherein a pH value at 20 deg. C ranges from 10 to 13, and the inorganic composition consists of colloidal particles of said reaction product with particle of relatively small, middle and large sizes.

(2) Second of the present invention provides a water-based membrane-forming inorganic composition produced by treating the composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt, with an alcohol containing a mineral acid, wherein a water content is 50 weight percents or lower and the pH value at 20 deg. C ranges from 10 to 12.

(3) Third of the present invention provides a water-based membrane-forming inorganic composition produced by adding a soluble metal composition and/or melamine isocyanurate to the composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt.

(4) Fourth of the present invention provides a water-based membrane-forming inorganic composition produced by adding an alkali earth metal compound and an alcohol to the composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt.

(5) Fifth of the present invention provides a method for producing a water-based membrane-forming inorganic composition according to the present invention, having the steps of adding an amount of stoichiometrically large excess metal silicon to a predetermined amount of water, subsequently adding the predetermined amount of said submineral acids, and adding the predetermined amount of the alkali metal hydroxide, wherein the submineral acids and the alkali metal hydroxide are used for addition in a weight ratio of the submineral acids to the alkali metal hydroxide, 4:1 to 1:4.

(6) Sixth of the present invention provides a method for producing the water-based membrane-forming inorganic composition according to the present invention, wherein the ratio of addition of the submineral acids to the alkali metal hydroxide is changed within a range from 4:1 to 1:4 to adjust the average particle size of the colloidal particles to be a given value.

(7) Seventh of the present invention provides an inorganic foam obtained by heating the water-based membrane-forming inorganic composition according to the present invention, wherein the inorganic foam has a multilayer structure in which a foam made of large size colloidal particles contained in the compound contains the foam made of middle size colloidal particles and the foam made of middle size colloidal particles contains the foam made of small size colloidal particles. The inorganic foam according to the present invention is excellent in heat insulation performance, has preferably a less heat conductivity than 0.03 W/ m*K measured at 310 K by a routine method. The inorganic foam according to the present invention suitably keeps a heat-absorbing performance after heating to 100 deg. C or higher temperature.

(8) Eighth of the present invention provides a method for producing an inorganic foam, having the steps of condensing by heating the water-based membrane-forming inorganic composition according to the present invention to make a condensate with a water content ranging from 10 to 50 weight percents, continuing to heat at 150 deg. C or higher to make it in a plasticized intumescent product, and further dehydration membrane-forming hardening or cooling hardening.

(9) Ninth of the present invention provides a method for producing an inorganic foam, having the steps of condensing by heating the water-based membrane-forming inorganic composition according to the present invention to make the condensate with a water content ranging from 10 to 50 weight percents, using the obtained condensate as a precursor for heat molding, heating the precursor at 150 deg. C or higher to make it in a plasticized intumescent product, and further dehydration membrane-forming hardening or cooling hardening.

(10) Tenth of the present invention provides a method for producing an inorganic foam, having the steps of mixing the water-based membrane-forming inorganic composition according to the present invention with a pulverized glass material, and heating the obtained mixture at 500 deg. C or higher.

(11) Eleventh of the present invention provides a method for producing a heat insulating composite material, having the steps of forming a coated film by coating the water-based membrane-forming inorganic composition according to the present invention over a surface of a fibrous, wooden, or metallic sheet-like or board-like base material, and foaming by heating the obtained coated film together with pressing or pressing in a mold a surface of the coated film to compact it.

(12) Twelfth of the present invention provides a method for producing a heat insulating composite material, having the steps of mixing the water-based membrane-forming inorganic composition according to the present invention with an inorganic or organic fibrous material or impregnating the inorganic composition into an inorganic or organic fabric or nonwoven fabric fibrous structure, dehydrating by pressing or heating the obtained mixture or the fibrous structure subjected to impregnation, and pressing with further heating the product obtained by pressing or the product obtained by heat dehydration.

(13) Tthirteenth of the present invention provides a method for producing an inorganic foam, having the step of mixing the water-based membrane-forming inorganic composition according to the present invention with an alkali earth metal compound and hardening the obtained mixture.

The Best Mode for Carrying Out the Invention

The present invention will be described below in detail.

(1) Water-based membrane-forming inorganic composition

The water-based membrane-forming inorganic composition (hereafter may be simply called "composition") according to the invention can be obtained by reacting a metal component to an alkali metal hydroxide in a water solvent in the presence of a fluoride, a borate compound, sulfurous acid, a sulfite salt, nitrous acid, a nitrite salt, phosphorous acid, a phosphite salt, or the like (in the invention, these compounds are called "submineral acids").

In this invention, metal silicon is used as the metal component. Metal silicon is preferably of a high purity, normally, that used is of a 90 weight percents or higher purity, and preferably 95 weight percents or higher purity. Metal silicon may be a block, grains, or a powder.

Submineral acids usable for the invention include fluorides such as sodium fluoride, potassium fluoride, cesium fluoride, magnesium fluoride and ammonium fluoride; boric acid, borax, borate compounds such as sodium borate and potassium borate; sulfurous acid; sulfite salts such as sodium sulfite, potassium sulfite, ammonium sulfite and calcium sulfite; phosphorous acid; phosphite salts such as sodium phosphite, potassium phosphite and ammonium phosphite.

As alkali metal hydroxides, lithium hydroxide, sodium hydroxide, potassium hydroxide, and the like can be used.

The composition of the invention is characterized by consisting of amorphous colloidal particles, which are the reaction product of metal silicon, the submineral acids as described above, and the metal hydroxide, having the large, middle, and small sizes. In the invention, "having the large, middle, and small sizes" has the sense that the composition of the invention consists of colloidal particles having relatively large particle size, relatively middle particle size, and relatively small particle size and, in other words, consists of colloidal particles having uneven distribution of particle sizes.

It is sufficient that the composition consisting of colloidal particles having the large, middle, and small sizes is obtained by adding an amount of stoichiometrically large excess metal silicon to a water solvent, followed by adding the predetermined amount of the submineral acids and the alkali metal hydroxide, or adding a mixture of the predetermined amount of the submineral acids and the alkali metal hydroxide, and, to make pH value of the reaction product 10 to 13, adding the submineral acids and the alkali metal hydroxide in a weight ratio of the submineral acids to the alkali metal hydroxide, 4:1 to 1:4 for reaction at 60 to 90 deg. C for some hours to some ten hours.

Here, "amount of stoichiometrically large excess" means that metal silicon is added in such an amount that unreacted metal silicon remains in the reaction solution after the completion of the reaction of the metal silicon to the alkali metal hydroxide. Normally, metal silicon used is 6-fold mole or more, preferably 10-fold mole or more to the alkali metal hydroxide.

This reaction can be conducted stirring and also conducted leaving stand without stirring.

This reaction has not been explained in detail. However, it is conceived that metal silicon forms such as a Lewis acid compound with sodium fluoride and does not react immediately to the alkali metal hydroxide and, therefore, forms no sodium silicate but silanol salt or siloxane. Thus, the submineral acids may contribute to controlling dissolution of the alkali metal hydroxide into water.

The particle size of amorphous colloidal particles depends on a pH value of the reaction solution. Changing arbitrarily the amount and the ratio of the above described metal hydroxide and the submineral acids, which are added, allows the particle size of amorphous colloidal particles to control to an arbitrary size. As a rule, a high pH of the reaction product (aqueous solution) allows yielding colloidal particles with the relatively large size and, on the contrary, a low pH allows yielding colloidal particles with the relatively small size.

The pH value of the composition according to the invention at 20 deg. C ranges from 10 to 13. Changing the ratio for adding the submineral acids and the alkali metal hydroxide in the range from 1: 4 to 4: 1 in a weight ratio enables to yield the composition with the predetermined pH value within the range as described above. The pH values of the composition, for example, sodium fluoride is used as the submineral acid and sodium hydroxide is used as the alkali metal hydroxide, roughly becomes as those shown in Table 1 presented below.

Table 1

| NaF/NaOH | pH value |
|----------|----------|
| 1/2 | 12.5 |
| 1/1 | 12.0 |
| 2/1 | 11.5 |

In the composition according to the invention, an average particle size of the colloidal particles changes. Even when the pH value is any one in the range of 10 to 13, the composition has amorphous colloidal particles with the large, middle and small particle sizes.

For example, at pH 12.5, the composition can be obtained to have relatively large-sized colloidal particles with a particle size ranging from 150 to 500μm, relatively middle-sized colloidal particles with the particle size ranging from 50 to 150μm, and relatively small-sized colloidal particles with the particle size ranging from 10 to 50μm. At pH 12.0, the composition can be obtained to have relatively large-sized colloidal particles with a particle size ranging from 100 to 400μm, relatively middle-sized colloidal particles with the particle size ranging from 40 to 100μm, and relatively small-sized colloidal particles with the particle size ranging from 5 to 40μm, and at pH 11.5, the composition can be obtained to have relatively large-sized colloidal particles with a particle size ranging from 50 to 150μm, relatively middle-sized colloidal particles with the particle size ranging from 20 to 50μm, and relatively small-sized colloidal particles with the particle size ranging from 1 to 20μm.

The composition according to the invention shows normally fluidity, which is similar to that of sodium silicate No. 4 standard product and solubilized silic acid, also normally showing 500cP of viscosity or lower. It is presumed that this fluidity is caused by a function of a fine, dense filling factor effect of colloidal particles with the large, middle, and small sizes comprising the composition. Viscosity of the composition can be measured by, for example, a MKS (Maron-Xrleger-Sinko) viscometer.

The composition according to the invention includes those containing various specific gravities and metal (metal component) contents. For example, in the case where the pH value ranges from 12 to 13, the specific gravity is about 1.5. Replacing partially a composition of the alkali metal hydroxide to borax enables to increase ametal component ratio and a specific gravity as described above. On the other hand, in the case where the composition having the pH value ranges from 11 to 11.5, the specific gravity is about 1.3 and the metal (metal component)/alkali metal value ratio (weight ratio) becomes normally about 3.

Alcohols, to which an acid has been added, can be added to the composition having a high pH value (pH 12 to 13) to be dehydrated and made low pH (pH 10 to 11) resulting in a high specific gravity (1.5 to 1.8). The acid used includes mineral acids such as hydrochloric acid, sulfuric acid, nitric acid and phosphoric acid, and organic acids such as acetic acid, lactic acid and propionic acid, and preferably a mineral acid. As alcohols, a hydrophilic alcohol can be preferably used and includes, for example, monovalent alcohols such as methanol, ethanol, n-propanol and isopropanol; divalent alcohols such as ethylene glycol and propylene glycol; and trivalent alcohols such as glycerol.

In addition, adding a soluble (amorphous) metal component to the composition according to the invention allows increasing the metal (metal component) content ratio (Si/ Na weight ratio). Increasing the metal component content ratio to 2.5 or higher and preferably 3 or higher allows obtaining an inorganic foam excellent in water resistance. As the soluble metal component, soluble silic acid, for example, such as fly ash containing silicon, white carbon and silica sol can be used. The amount of soluble silic acid added can be set to make the composition be a desired metal component content ratio.

Furthermore, the water-based membrane-forming inorganic composition obtained by adding 1 species or 2 or more species of the predetermined amount of the alkali earth metal compound followed by further addition of alcohols to the water-based membrane-forming inorganic composition as described above is excellent in stability for long-time preservation. This may be caused by that addition of alcohols inhibits (stops) a condensation polymerization reaction.

Alcohols used for addition include lower alcohols such as methanol, ethanol, n-propanol, isopropanol, n-butanol, sec-butyl alcohol and t-butyl alcohol; glycols such as ethylene glycol and propylene glycol; and trivalent alcohols such as glycerol. Among these alcohols, in view of easy removal by evaporation, alcohols having a 120 or lower deg. C boiling point are preferable. The amount of alcohols added is not specially restricted, and 1 or higher weight percents to a whole of the composition can provide an effect of suppressing the reaction. In the case where the inorganic foam is desired to be yielded by using the composition to which the alkali earth metal compound and alcohols have been added, as mentioned later, it is suf f icient to heat for removal of an alcohol content by evaporation and heat furthermore.

(2) Inorganic foam.

The inorganic foam according to the invention is characterized by having a multilayer membrane structure in which the foam of the large-sized colloidal particles includes the foam of the middle-sized colloidal particles and the foam of the middle-sized colloidal particles includes the foam of the small-sized colloidal particles, which are contained in the composition according to the invention. The inorganic foam according to the invention has the multilayer membrane structure and, therefore, has a light and excellent strength and also has the excellent heat insulation performance comparable to or higher than the organic foam.

The inorganic foam according to the invention can be obtained by (1) a method of condensing the water-based membrane-forming inorganic composition to prepare a condensed product with 10 to 50 weight percents of the water content by heating and continuing to heat to 100 to 1000 deg. C, preferably 150 to 900 deg. C to produce the plasticized intumescent product, and finally membrane-forming hardening by dehydration or hardening by cooling, or (2) a method of using the condensed product as described above as the precursor for heat molding, continuing to heat them to 100 to 1000 deg. C, preferably 150 to 900 deg. C to produce the plasticized intumescent product, and finally membrane-forming hardening by dehydration or hardening by cooling

Steps of foaming of an inorganic aqueous solution must include evaporation of an excess of water by heating to cause thickening, plasticization, a membrane strength resistant to a vapor pressure of water contained, and membrane-forming hardening through drying. Such situation resembles a phenomenon in that karumera-baking is successfully carried out by dissolving sugar added in water by heating, further heating to dehydrate and thicken, and then, baking soda added is evaporated followed by cooling to produce the membrane-forming strength resistant to a vaporization pressure. A molecular weight of an inorganic high polymer can be known only by measuring a weight average molecular weight and different from the case of an organic high polymer. The inorganic high polymer is made to the foam only when it has a high molecular weight and a membrane-forming performance.

The water-based membrane-forming inorganic composition according to the invention is colloidal particles consisting of the inorganic high polymer consisting of an amorphous oligomer such as a dimer and trimer, and is presumed as a partially polymerized condensed product having many hydroxyl groups in its molecule. Heating the composition according to the invention evaporate water to raise a concentration of a solid component and accordingly, the dehydration condensation reaction goes well (the composition in this state is also called "a precursor for heat molding").

The dehydration condensation reaction produces water as a reaction product. This water molecule is enclosed inside a colloidal particle. Further heating continued produces water vapor to evaporate inside the colloidal particle resulting in working as a kind of foaming agent. On the other hand, the composition according to the invention becomes a thermoplastic high polymer in accordance with a progress of the dehydration condensation reaction and, thus, expands by evaporation of water vapor to produce bubbles (this state is also called "plasticized intumescent product"). Colloidal particles with the large, middle, and small sizes aggregate in accordance with water evaporation and, thus, it is presumed that foaming action caused by water vapor as described above goes well and also, the inorganic foam having the structure (multimembrane structure) in which the large bubbles contain the middle bubbles and the middle bubbles contain the small bubbles, is formed.

The dehydration condensation reaction is the reaction to produce water and the water evaporates by heating. In is presumed that heat of evaporation of this water content causes heat-absorbing property. From the result of measurement of a change of an FT-IR spectrum through a course of heating the composition of the invention to make the inorganic foam, the presence of water molecule was confirmed after heating was continued until the temperature raised to a 800 deg. C or higher.

Heating the water-based membrane-forming inorganic composition according to the invention causes discharge of the water molecule showing a weight reduction. However, a temperature region showing the weight reduction changes in accordance with a kind of the submineral acids and the alkali metal hydroxide used for preparation of the composition and a compounding ratio thereof. The temperature region in which the water molecule is discharged means a starting temperature of foaming, that is, a softening temperature and a melting temperature. Therefore, according to each purpose, a proper selection and use of the water-based membrane-forming inorganic composition, of which the pH value and/or the metal component content varies according to the kind and compounding ration of the submineral acids and the alkali metal hydroxide used, the inorganic foam having various performance and properties can be obtained.

A heating method to obtain the inorganic foam by heating the composition according the invention is not specially restricted and any method, for example, a method by irradiating an electromagnetic wave such as an microwave oven, a method of blowing dried heated air, a method of heating by installing in a heating funnel, and the like, can be applied. As a heat source, any ordinary heating apparatus using gas, electricity, electron, electromagnetic wave or sonic wave can be used. In addition, though a long time is required for hardening, the method of drying at a room temperature may be employed.

According to the method as described above (2), an inorganic foaming mold having various shapes can be yielded. Methods for yielding the inorganic foaming mold include, for example, (i) the condensed product obtained as described above is prepared as a sheet-like precursor for heating molding to heat this material, (ii) the method of pulverizing the condensed product as described above to make a precursor for heat-molding and placing this product in a mold to be subjected to heat molding, (iii) the method of making the condensed product as described above in pellets to prepare the precursor for heat-molding and placing this product in the mold to be subjected to heat pressing, and (iv) the method of molding the pellets as described above by an injector.

The inorganic foaming mold can be also obtained by continuing to heat the water-based membrane-forming inorganic composition prepared by treating the water-based membrane-forming inorganic composition according the invention with alcohol containing a mineral acid to make the water content in 50 or lower weight percents and the pH value at 20 deg. C in 10 to 12, or by continuing to heat the water-based membrane-forming inorganic composition yielded by adding the soluble metal compound and/or melamine isocyanurate to the water-based membrane-forming inorganic composition to a 100 or higher deg. C to prepare a precursor for heat-molding, and continuing to heat to prepare the plasticized intumescent product followed by dehydration membrane-forming hardening or cooling hardening.

The inorganic foaming mold can be also obtained by mixing the water-based membrane-forming inorganic composition according the invention with a predetermined amount of an amorphous pulverized product (such as glass pulverized product) followed by heating the obtained mixture to 500 or higher deg. C (temperature above a glass melting point or higher). The inorganic foaming mold yielded by these methods is excellent in not only heat insulation performance, but also waterproof performance.

Furthermore, a heat insulating composite material with a high strength thin membrane layer can be prepared by coating a surface of a fibrous, wooden or metallic sheet-like or board-like base material with the predetermined amount of the water-based membrane-forming inorganic composition according the invention, heating the obtained coated film to form a foam having a hermetic structure of the multi layer membrane structure, together with pressing or pressing in the mold the surface layer to compact it. This heat insulation material is particularly useful as a lightweight and high-strength heat insulation material.

All the inorganic foaming mold obtained by such method can be assigned to 1st class flame-retardant or non-combustible FRC (Fiber Reinforced Ceramics). The FRC as described above can be made in a mold with various shapes such as a board-like body.

The inorganic foaming mold according to the invention is useful as structural materials such as an unremoving formwork material, a ceiling material, a floor material, a curtain wall, a sash, a pillar and a beam. In addition, the inorganic foaming mold is a heatproof high strength material and, thus, can be used for a space shuttle, and an interior and exterior finishing materials for an automobile. A structure with a plurality of layers having a surface material made of the FRC and a core material made of the inorganic foam as described above can be used as a 2 x 4 panel, a curtain wall, and a fire-resistant partition.

Adding 1 species or 2 or more species of the predetermined amount of the alkali earth metal compound to the water-based membrane-forming inorganic composition according the invention enhances hardening to realize preparation of the inorganic foam for shorter time and at a lower temperature.

The alkali earth metal compound includes, for example, a compound of magnesium and calcium, more specifically, cements such as magnesia cement, alumina cement and Portland cement; hydroxides of alkali earth metals such as magnesium hydroxide and calcium hydroxide; oxides of alkali earth metals such as magnesium oxide and calcium oxide; halides compounds of alkali earth metals such as magnesium chloride, magnesium bromide and calcium chloride; sulfate salts of alkali earth metals such as magnesium sulfate and calcium sulfate; nitrate salts of alkali earth metals such as magnesium nitrate and calcium nitrate; and carbonate salts of alkali earth metals such as magnesium carbonate and calcium carbonate; and, however, is not restricted to these compounds.

The amount of the alkali earth metal compound added to 100 weight parts of the composition ranges normally from 0.1 to 500 weight parts, preferably 1 to 100 weight parts, more preferably from 5 to 75 weight parts. The inorganic foam obtained by such method is excellent in waterproof performance.

The inorganic foam according to the invention obtained by such the way is excellent in the heat insulation performance. The heat conduction ratio thereof measured by the routine method at 310 K is less than 0.03 W/m*K, preferably ranging from 0.01 to 0.03 W/m*K, more preferably ranging from 0.01 to 0.02 W/ m*K. The inorganic foam according to the invention has the excellent heat insulation performance equal to or higher than that of an organic heat insulation material having a high heat insulation performance, such as urethane foam currently marketed.

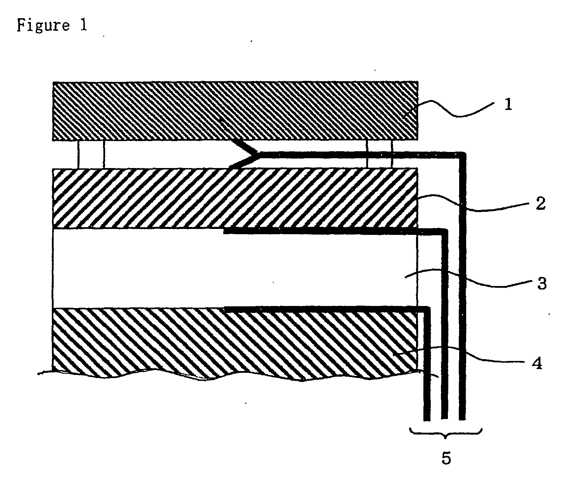

The heat conduction ratio of the inorganic foam according to the invention can be measured by a publicly known method. The method of measuring the heat conduction ratio is roughly categorized into the routine method and non-routine method. The routine method is further categorized into an absolute method and a comparative method. In the absolute method, the heat conduction ratio can be measured by using a measuring apparatus illustrated in Fig. 1. In Fig. 1, reference numeral 1 shows a heat insulation regulation heater, reference numeral 2 shows a heater, reference numeral 3 shows a sample, reference numeral 4 shows a heat sink, reference numeral 5 shows a thermocouple. The heat conduction ratio k can be calculated by the following formula after mounting a sample (inorganic foam) having a length L and a sectional area A on the measuring apparatus illustrated in Fig. 1 and assigning the amount of heat per a unit time, which conducts from heater 2 to the sample, to q, and calculating a temperature difference, $\Delta T$, between a top face and a bottom face of the sample in the standing state by the thermocouple 5.

$$k=q(A/L)^{-1} \times \Delta T^{-1}$$

It was found that heating the inorganic foam according to the invention by a cone calorimetric tester used in a testing method for a fire-preventing material at $50kW/m^2$ for 2 minutes resulted no rise of a temperature of an exhaust gas and, on the contrary, the heat was absorbed. In addition, measuring heat insulation performances (specific heat, heat conduction ratio, etc.) at each temperature heating from the ordinary temperature to 1000 deg. C showed no considerably large change. On the other hand, it was confirmed that heating, as described above, the inorganic foam according to the invention to 800 deg. C or higher temperature left water molecules.

Conventional inorganic fire-preventing materials such as cement and gypsum discharges water of crystallization by heating to the temperature ranging from 600 to 800 deg. C to cause pulverization to powder resulting in breaking its structure. On the other hand, the inorganic foam according to the invention keeps a heat absorbing action after heated to 100 deg. C or higher and dehydrated incompletely by heating to 800 deg. C or higher. This fact shows a usefulness of the inorganic foam according to the invention also as a noncombustible (fire preventive) material of construction.

(Example)

The invention will be further described in detail below with special reference to examples. However, the invention is not restricted by the following examples.

(Example 1)

Using metal silicon (purity 99%), sodium fluoride as a submineral acid, and sodium hydroxide as an alkali metal hydroxide and changing a weight ratio of the amount of sodium fluoride and sodium hydroxide, which are added, in the range of sodium fluoride : sodium hydroxide=(10 to 5) : (5 to 10), various species of the water-based membrane-forming inorganic compositions A to C having the pH values and $SiO_2/Na_2O$ ratios, which are presented in Table 2 as described above, were prepared. Using sulfuric acid, phosphorous acid, nitrous acid, other submineral acids, and'salts thereof, which were replaced to sodium fluoride, also yielded the water-based membrane-forming inorganic compositions having approximate pH values and $SiO_2/Na_2O$ ratios. In Table 2, the unit of contents of $SiO_2$ and $Na_2O$ is ppm and the $SiO_2/Na_2O$ indicates the weight ratio.

Table 2

| Sample | pH | $SiO_2$ | $Na_2O$ | $SiO_2/Na_2O$ |
|--------|------|---------|---------|---------------|
| A | 11.5 | 48.90 | 21.40 | 2.28 |
| B | 12.0 | 53.50 | 22.02 | 2.42 |
| C | 12.5 | 60.90 | 28.06 | 2.17 |

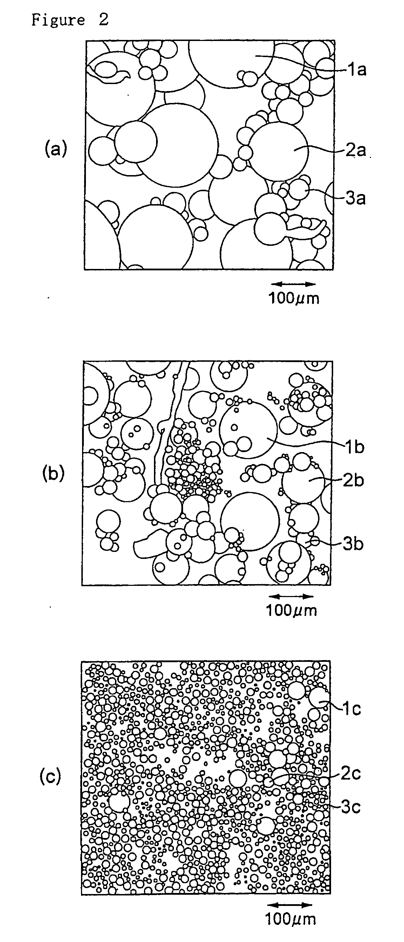

FIG. 2 shows a sketched view of an observation of colloidal particles of the compositions A to C of Table 2 as described above using an SEM (scanning electron microscope). In Fig. 2, (a), (b) and (c) indicate compound A at pH 12.5, compound B at pH 12.0, and compound C at pH 11.5, respectively. Clearly known from Fig. 2, the colloidal particles (1a, 1b, 1c, 2a, 2b, 2c, 3a, 3b and 3c) show relatively large size according to the increase of pH values. On the other hand, regardless of magnitude of pH values, the compositions A, B and C included the large-, middle-, and small-sized colloidal particles and an Si content (metal component content) became larger in the pH value higher.

(Example 2)

1 weight part of 96% sulfuric acid was added to and mixed with 10 weight parts of industrial grade ethyl alcohol and to this was added 30 weight parts of the compositions A to C, respectively, of Example 1 and mixed. Either treatment produced 70 to 80% thickened product. pH values thereof lowered ranging from 10.8 to 11.2 and their $SiO_2/Na_2O$ ratios

(the weight racio) became 3 or higher. Heating the individual thickened products at 100 deg. C for 30 seconds followed by cooling produced organic rubber-like elastic products and water contents decreased 35 or lower weight percents. These products were assigned to a foaming precursor to make it in a sheet followed by heating by a microwave oven to yield evenly foamed molds, respectively. In addition, these were made in pellets and molded by heat press or injection by using an injector to yield an inorganic foaming mold.

(Example 3)

The composition C of Example 1 was continued to heat at the temperature ranging from 150 deg. C to 900 deg. C to prepare an inorganic foam. At this preparation, a water reduction amount (%) for each temperature and a water reduction proportion (%) of contained water were measured and the result (3 classes ranging from 20 to 1000 deg. C) was presented in the following Table 3.

Table 3

| Temperature range (°C) | Water reduction (%) | Water reduction proportion (%) |
|---|---|---|
| 20~200 | 58.7 | 94.070 |
| 200~500 | 2.9 | 4.648 |
| 500~1000 | 0.8 | 1.282 |

Water reduction (%): (water reduction/whole weight) $\times$ 100
Water reduction proportion (%): (water reduction/whole water content) $\times$ 100

Although not shown in Table 3, it was found as the result of measurement that heating to 150 or higher deg. C yields the product with the water content of 30 weight percents or lower enabling to use as the inorganic foam precursor according to the invention.

Next, heating this precursor with an electromagnetic wave of 500 W allowed plasticizing, foaming, and solidifying after 3 minutes. It was found that the water content left at the temperature ranging from 500 to 1000 deg. C and kept a heat-absorbing insulation performance after a solid was produced at 200 deg. C. In addition, cooling rapidly the precursor as described above after heating to 200 deg. C yielded the solid containing water of 3.7 weight percents.

(Example 4)

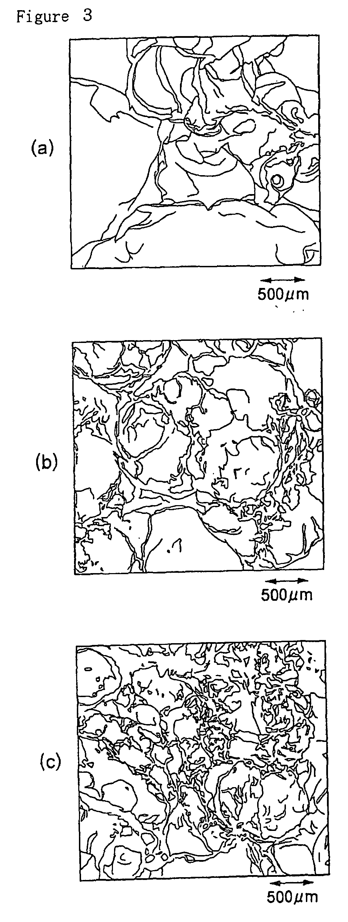

Inorganic foams were prepared by heating the samples A to C of Example 1 to 500 deg. C. Fig. 3 shows the sketched view of a sectional structure of those foams observed by the SEM. In Fig. 3, (a) is the sectional structure of the foam obtained from the composition A, (b) is of the foam obtained from the composition B, and (c) is of the foamobtained fromthe composition C, respectively. Regardless of the particle size of colloidal particles, it was observed that the large-sized particles contained the middle-sized particles and the middle-sized particles contained the small-sized particles.

(Example 5)

Air-drying the composition obtained by treating the composition B of Example 1 with ethanol containing an acid produced a dough-like product. This was assigned to the inorganic foam precursor and heated to 250 deg. C to make the size in 2cm x 22cm x 22cm resulting in foam molding. The obtained foam mold was finished by adhering with a cheesecloth, which was subjected to impregnation treatment of a boric acid-based water-based inorganic compound followed by drying, with an inorganic adherent (commercial name: KOHMIX bond made by KOHMIX Co., Ltd.). From this preparation, a test piece of the size of 2cm x 10cm x 10cm was prepared. The obtained test piece was subjected to a heating combustion test for 1200 sec (20 min), which is applied to a non-combusting material test, by using a colorimetric tester of an industrial research institute. As the result of the test, almost no changes were resulted from masses and smoke temperatures and heat generation was never observed.

(Example 6)

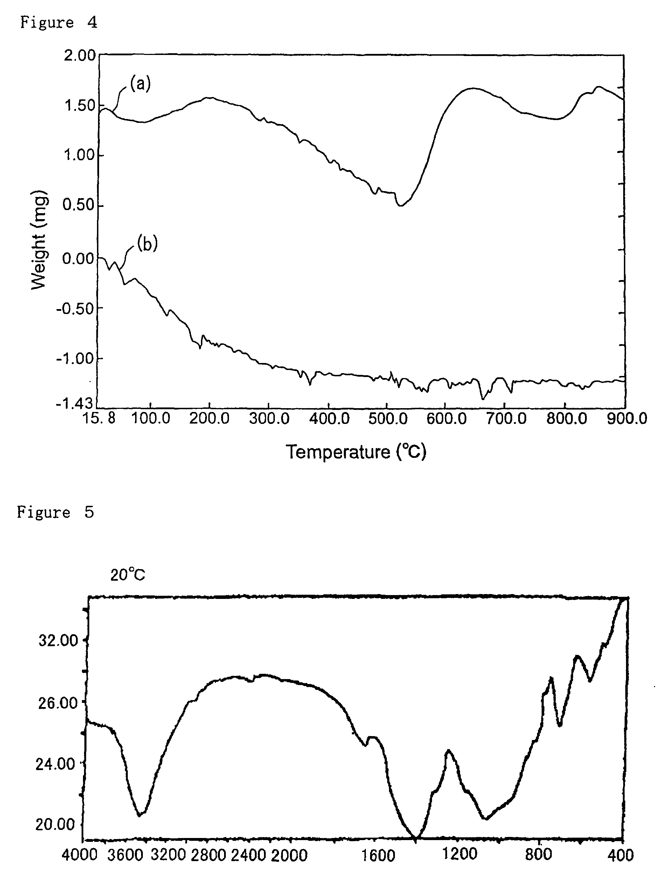

The composition A of Example 1 was continuously heated from 15.6 deg. C to 900 deg. C tomeasure TG-DTA (thermogravimetric differential thermal analysis) by a TG-DTA measuring apparatus (type: TAS-300, Rigaku Corp. made). The result of the measurement is shown in Fig. 4. On the basis of an irregular curve (a) of Fig. 4, it is assumed that heating did not prevent heat absorption.

(Example 7)

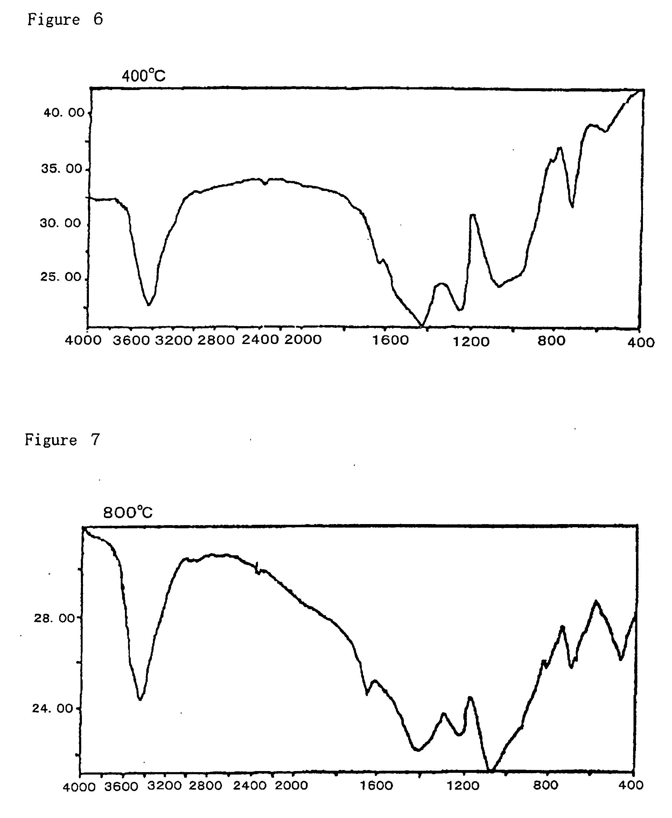

The composition A of Example 1 was continuously heated from 20 deg. C to 900 deg. C to measure an FT-IR spectrum. Figs. 5 to 7 show the obtained spectrum charts. Fig. 5, Fig. 6 and Fig. 7 indicate data obtained at 20 deg. C, 400 deg. C and 800 deg. C, respectively. A peak at around 3400 to 3500 cm$^{-1}$ indicates the presence of water molecules. In case of heating to 800 deg. C (Fig. 7), this peak also appeared showing the heat absorbing action of the inorganic foam of the present Example.

(Example 8)

For the compositions A to C of Example 1, the water content was reduced to 30 or lower weight percents by the pressure-reducing heating method using a water reduction apparatus (Sakuma Seisakusyo Ltd. made) based on the pressure-reducing heating system of Sakuma Seisakusyo to obtain nonfoamed molding precursors with specific gravities ranging from 1.6 to 2, respectively. Condensing the composition by using such the pressure heating method produced a film-like high polymer having the molecular weight of 5000 or higher. Observation of such the high polymer by using an electron microscope at a magnification ranging from 2000 to 5000 showed the film-like product similar to that of a synthetic resin high polymer. Using this product yielded an inorganic foam mold by heat molding at the temperature ranging from 150 deg. C to 900 deg. C.

(Example 9)

The compositions A to C of Example 1 were each heated to 60 to 100 deg. C by using an autoclave allowing 1-20kg/cm$^2$ pressure to produce the high polymer having the weight average molecular weight ranging from 5000 to 10000. This product was subjected to heat molding at 150 deg. C to 900 deg. C to yield an inorganic foam mold.

(Example 10)

For the composition B of Example 1, the water content was condensed to 30 or lower weight percents to produce a precursor for foam-molding. This product was made in pellets, and the obtained pellets were injected in a mold for heating resulting in the inorganic foam mold. The specific gravity of this mold was 1 or lower and, in average, ranging from 0.3 to 0.5.

(Example 11)

The compositions A to C of Example 1 were subjected to mixing with a natural material such as cotton, linen, wool or pulp, or mixing with or impregnating into a monofilament, fabric or nonwoven fabric of alumina, alumina silica, potassium titanate, carbon felt, carbon chop, glass, or the like. A weight of the obtained mixture or impregnated product increased 2 to 6 folds the materials subjected to mixing or impregnation. Each of these products were dried at the temperature ranging from 60 deg. C to 120 deg. C without foaming to result in yielding the precursor having the water content of 20 to 40 weight percents. These products were placed in a 3-dimensional mold with a rib to subj ect to press heating at 150 deg. C finally resulting in the inorganic foaming mold. All the obtained molds had a 1 mm thickness, 10 mm rib, and 200kg/cm2 or higher flexural strength.

(Example 12)

The composition A of Example 1 was dried by using a drier to the water content of 30 weight percents followed by making in pellets. The pellets were placed in a silicon frame having a gap for steam exhaust, aligned, and heated to 250 deg. C at a pressure of 3kg/cm$^2$ to produce a foamed light product having a size of 20mm (thickness) x 300mm x 300mm and a specific gravity of 0.4.

(Example 13)

The composition A of Example 1 was heated at the reduced pressure by using a rim tester (Yamashiro Seimitsu Kikai Co., Ltd. made) of a liquid-solidifying molding to yield a precursor having the water content of 30 weight percents. This product was injected into a mold with a special heater to be subjected to heat molding. An inorganic foam mold with a small cup shape of 0.7mm in thickness was obtained.

(Example 14)

A 50 g of the composition A of Example 1 was measured, dehydrated to make a solid content in 70 or higher weight percents resulting in production of a precursor for molding. This product was made in a sheet, heated to the temperature ranging from 250 to 350 deg. C to yield an inorganic foam mold with 27.1mm in thickness.

Changes of a specific heat and the heat conductive ratio of the obtained inorganic foam mold according to the temperature were measured by using a measuring apparatus shown in Fig. 1. The measured change of the specific heat according to the temperature is shown in the following Table 4.

Table 4

| Temperature (°C) | Specific heat (cal/g°C) |
|---|---|
| 20 | 0.200 |
| 300 | 0.353 |
| 400 | 0.310 |
| 600 | 0.312 |
| 800 | 0.326 |
| 1000 | 0.358 |

As clearly known form Table 4, the specific heat of the inorganic foam of Example 14 showed almost no change by heating to the temperature ranging from 300 to 1000 deg. C.

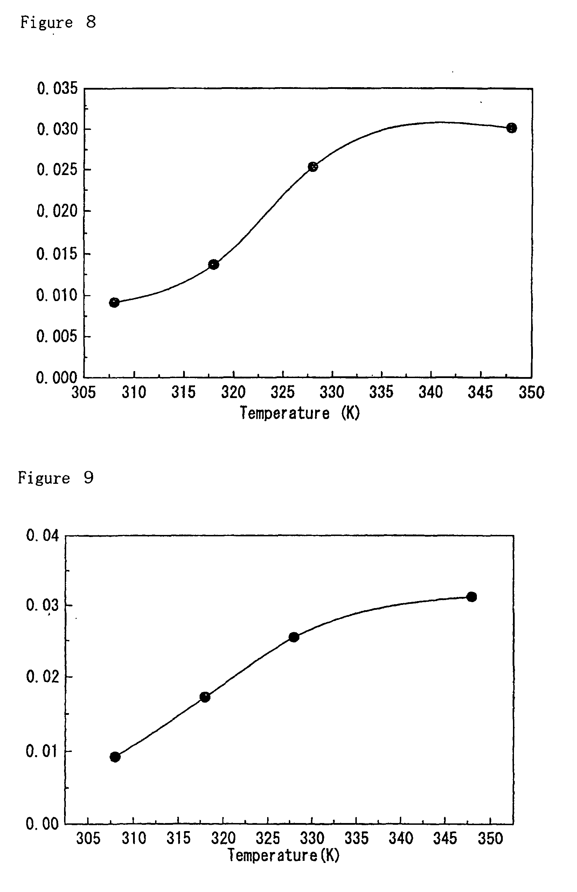

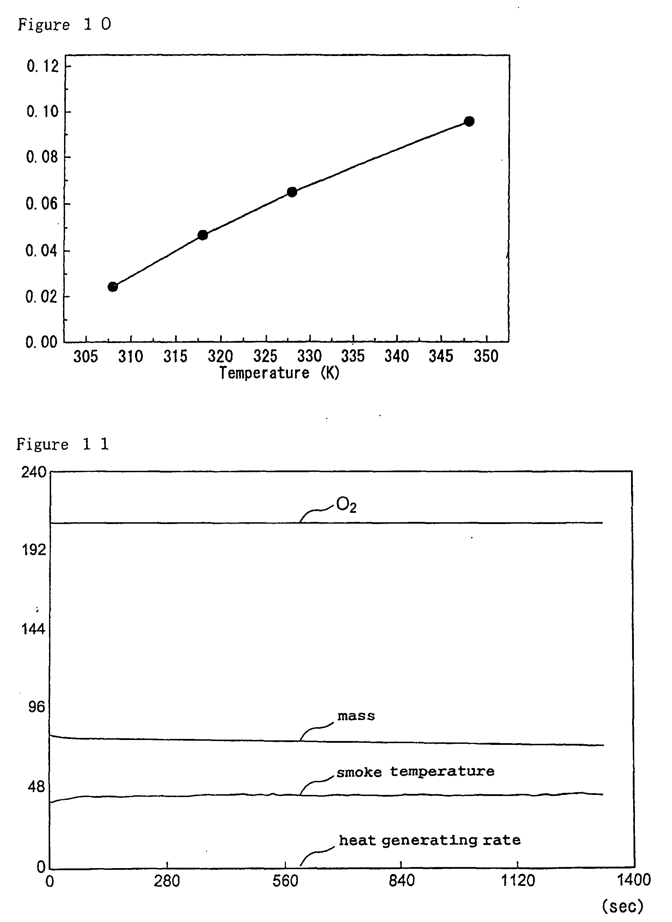

In addition, the result of measurement of the change of the heat conductive ratio according to the temperature is presented in each of Figs. 8 to 10. Fig. 8 is the result of measurement for the mold obtained from the composition A, Fig. 9 is for the mold obtained from the composition B, and Fig. 10 is for the mold obtained from the composition C.

Moreover, the inorganic foam of Example 14 was cut in a size of 10cm x 10cm to be subjected to a cone colorimeter III test according to ASTM standard. Contents of the test and the result of the test are shown in the following Table 5 together with. In addition, when continuous heating from 0 deg. C to 1300 deg. C, the changes of a heat generating rate (kW/m$^2$), smoke temperature (deg. C), mass (g) and oxygen concentration (%) of the inorganic foam according to temperatures are shown in Fig. 11.

Table 5

| Test condition : | | |
|---|---|---|
| Sample direction | : | horizontal |
| Sample area | : | 0.010000 $m^2$ |
| Sample thickness | : | 27.1 mm |
| Sample mass | : | 78.40 g |
| Irradiation amount | : | 50.0 $KW/m^2$ |
| Exhaust gas flow | : | 0.024 $m^3/sec$ |
| Orifice type | : | large |
| Sample distance | : | 25 mm |
| Time for test | : | 1202.70 sec |

| Comment : | | |
|---|---|---|
| Comment before test | : | |
| Comment after test | : | No ignition |

| Conversion parameter : | | |
|---|---|---|
| Calibration factor | : | 0.04018287 |
| Conversion factor | : | 13.100 MJ/Kg |
| O2 baseline | : | 20.90223 % |

| Test result : | | |
|---|---|---|
| Maximum heat releasing rate (HRR) | : | 0.08 $KW/m^2$ at 89.70 sec |
| Average heat releasing rate (HRR) | : | −11.54 $KW/m^2$ |
| Average heat releasing rate T60 | : | −6.74 $KW/m^2$ |
| Average heat releasing rate T180 | : | −10.73 $KW/m^2$ |
| Average heat releasing rate T300 | : | −10.85 $KW/m^2$ |
| Released heat amount (THR) | : | −12.85 $MJ/m^2$ |
| Released heat amount T180 | : | −1.94 $MJ/m^2$ |
| Average combustion effective released heat amount (HOC) | : | −27.82 MJ/kg |
| Average specific extinction area (SEA) | : | 1.32 $m^2/kg$ |
| Average mass reduction ratio (MLR) | : | 0.415 $g/s \cdot m^2$ |
| Final sample mass | : | 73.62 g |
| Sample mass reduction | : | 4.78 g |
| Time for ignition | : | 0.0 sec |

From Table 5 and Fig. 11, the inorganic foam of Example 14 showed almost no mass change after heating from 0 deg. C to 1300 deg. C. On the other hand, an average heat generation rate was minus showing endothermic action.

From the above result of measurement, it was found that the obtained inorganic foam has the heat insulation performance equal to or superior to that of an organic heat insulation material made of a urethane-based or a phenol-based synthetic resin.

(Example 15)

Each 100 g of magnesia cement, alumina cement, and Portland cement white was placed in a cup and added with 40 g of a mixture solvent of water: ethanol= 7: 3 for kneading and finally resulting in preparation of neat cement each. On the other hand, each 100 g of the compositions A to C of Example 1 was measured in a paper cup and added with each 10 g (for the composition A), 30 g (for the composition C) and 50 g (for the composition D) of the aforementioned neat cement for enough mixing followed by hardening by heating with a microwave oven (at 500 W for 3 min). In the next day, the obtained hardened product was soaked in water, and after 7 days, no product was broken.

(Example 16)

Treating the composition A with an industrial grade ethyl alcohol added with 5 weight percents of concentrated hydrochloric acid produced a condensed film-forming inorganic composition containing the water content of 40 weight percents. Various kinds of cement similar to those of Example 15 were added and mixed in the same way as that of Example 15 followed by hardening by heating with the microwave oven (at 500 W for 1 min). In the next day, the obtained hardened product was soaked in water, and after 7 days, no product was broken.

Industrial Applicability

The water-based membrane-forming inorganic composition according the invention is characterized by including colloidal particles with uneven particle sizes. Foaming the composition according the invention by heating provides an inorganic foam having a multilayered membrane structure. The obtained inorganic foam has a heat insulation performance comparable to a synthetic resin and is useful as a replacement of a synthetic resin heat insulation material (organic heat insulation material) conventionally causing pollutions by burning and wasting.

According to a method for preparing the water-based membrane-forming inorganic composition of the invention, changing a proportion of adding amount of submineral acids to an alkali metal hydroxide from 4: 1 to 1: 4 can yields an inorganic composition having pH values arbitrarily in a range between pH 10 to 10 and including colloidal particles with uneven particle sizes. A size of colloidal particles generated depends on the value of the pH. Therefore, according to the method for preparing the water-based membrane-forming inorganic composition according the invention, changing the added amount of and the proportion of added amount of submineral acids to an alkali metal hydroxide allows obtaining the water-based membrane-forming inorganic composition comprising colloidal particles having a desired average particle size in accordance with a purpose.

The inorganic foam of the invention is easily produced by heating the water-based membrane-forming inorganic composition consisting of colloidal particles having large, middle and small particle sizes, and has multi-membrane structure, therefore it is excellent in heat insulation and has good strength with lightweight.

By properly selecting and using the water-based membrane-forming inorganic composition of the invention having a different pH value, metal ingredient containing ratio, solid content concentration and the like, an inorganic foam with various performances in accordance with an intended purpose can be produced.

The water-based membrane-forming inorganic composition of the inventionmay be added with a solubilizedmetal ingredient, melamine isocyanurate or the like, or washed with an alcohol containing an acid to result in a composition with a heightened content of metal component. The inorganic foam obtained from these compositions exhibit not only high heat insulating performance but also high water-resisting property.

Further, the water-based membrane-forming inorganic composition of the invention may be added with an alkali earth metal compound such as cements to enable a hardening reaction to progress more easily, resulting in producing the inorganic foam in a shorter period of time and at a lower temperature. On this occasion, addition of alcohols to the composition inhibits a hardening reaction to make it possible to obtain a water-based membrane-forming inorganic composition with high storage stability for a long period of time.

**Claims**

1. A water-based membrane-forming inorganic composition produced by reacting metal silicon to an alkali metal hydroxide in a water solvent in the presence of at least one species of submineral acid selected from a group consisting of a fluoride, a borate compound, sulfurous acid, a sulfite salt, nitrous acid, a nitrite salt, phosphorous acid and a phosphite salt, **characterized in that** a pH value at 20 deg. C ranges from 10 to 13, and that the inorganic composition consists of colloidal particles of said reaction product with particle of relatively, large middle and small sizes.

2. A water-based membrane-forming inorganic composition produced by treating a composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt, with an alcohol containing a mineral acid, wherein a water content is 50 weight percents or lower and the pH value at 20 deg. C ranges from 10 to 12.

3. A water-based membrane-forming inorganic composition produced by adding a solubilized metal composition and/ or melamine isocyanurate to a composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt.

4. A water-based membrane-forming inorganic composition produced by adding an alkali earth metal compound and an alcohol to a composition, which is produced by reacting metal silicon to an alkali metal hydroxide in a water solvent in the presence of at least one species of submineral acids selected from a group consisting of a fluoride, a borate compound, sulfurous acid, a sulfite salt, nitrous acid, a nitrite salt, phosphorous acid and a phosphite salt.

5. A method for producing the water-based membrane-forming inorganic composition as claimed in claim 1, comprising the steps of adding an amount of stoichiometrically large excess metal silicon to a predetermined amount of water, subsequently adding the predetermined amount of said submineral acids, and adding the predetermined amount of the alkali metal hydroxide, wherein said submineral acids and the alkali metal hydroxide are used for addition in a weight ratio of the submineral acids to the alkali metal hydroxide, 4:1 to 1:4.

6. The method for producing the water-based membrane-forming inorganic composition according to claim 5, **characterized in that** said submineral acid and alkali metal hydroxide are used at the addition ratio of the submineral acid : the alkali metal hydroxide within a range from 4:1 to 1:4 by weight.

7. An inorganic foam obtained by heating the water-based membrane-forming inorganic composition as claimed in any one of claims 1 to 4, wherein the inorganic foam has a multi-membrane structure in which a foam made of large size colloidal particles contained in said compound contains the foam made of middle size colloidal particles and the foam made of middle size colloidal particles contains the foam made of small size colloidal particles.

8. The inorganic foam according to claim 7, wherein heat conductivity at 310 K measured by a routine method is less than 0.03 W/ m*K.

9. The inorganic foam according to claim 7 or 8, keeping an heat-absorbing performance after heating to 100 deg. C or higher temperature.

10. A method for producing an inorganic foam, comprising the steps of condensing by heating the water-based membrane-forming inorganic composition as claimed in any one of claims 1 to 3 to make a condensate with a water content ranging from 10 to 50 weight percents, continuing to heat at 150 deg. C or higher to make it in a plasticized intumescent product, and dehydration membrane-forming hardening or cooling hardening the same.

11. A method for producing the inorganic foam, comprising the steps of condensing by heating the water-based membrane-forming inorganic composition as claimed in any one of claims 1 to 3 to make the condensate with a water content ranging from 10 to 50 weight percents, using the obtained condensate as a precursor for heat molding, heating said precursor at 150 deg. C or higher to make it in a plasticized intumescent product, and dehydration membrane-forming hardening or cooling hardening the same.

12. A method for producing the inorganic foam, comprising the steps of mixing the water-based membrane-forming inorganic composition as claimed in any one of claims 1 to 3 with an amorphous pulverized material, and heating the obtained mixture at 500 deg. C or higher.

**13.** A method for producing a heat insulating composite material, comprising the steps of forming a coated film by coating the water-based membrane-forming inorganic composition as claimed in any one of claims 1 to 3 over a surface of a fibrous, wooden, or metallic sheet-like or board-like base material, and foaming by heating the obtained coated film together with pressing or pressing in a mold a surface of the coated film to compact it.

**14.** A method for producing a heat insulating composite material, comprising the steps of:

mixing the water-based membrane-forming inorganic composition as claimed in any one of claims 1 to 3 with an inorganic or organic fibrous material or impregnating the inorganic composition into an inorganic or organic fabric or nonwoven fabric fibrous structure;
dehydrating by pressing or heating the obtained mixture or the impregnated structure; and
pressing the product obtained by pressing or the product obtained by heat dehydration while heating the same furthermore.

**15.** A method for producing an inorganic foam, compriaing a step of mixing the water-based membrane-forming inorganic composition as claimed in any one of claims 1 to 3 with an alkali earth metal compound and hardening the obtained mixture.

Figure 1

Figure 2

(a)

100μm

(b)

100μm

(c)

100μm

Figure 3

(a)

500μm

(b)

500μm

(c)

500μm

Figure 4

Figure 5

Figure 6

Figure 7

Figure 8

Figure 9

Figure 1 0

Figure 1 1